# EUROPEAN PATENT APPLICATION

(11) **EP 4 628 873 A1**
(43) Date of publication of application: **08.10.2025**
(21) Application number: 23897142.8
(22) Date of filing: 16.08.2023
(51) Int. Cl.: G01N 21/85, G01N 21/27, G06T 7/00

(54) **DETECTION SYSTEM AND DETECTION METHOD**

(30) Priority: 02.12.2022 JP 2022193312
(71) Applicant: The Japan Steel Works, Ltd., Tokyo 141-0032 (JP)
(72) Inventor: SHIOSAKI, Ayaka, Tokyo 141-0032 (JP); OKIMOTO, Tasuku, Tokyo 141-0032 (JP); HIHARA, Keita, Tokyo 141-0032 (JP)
(74) Representative: Simmons & Simmons LLP (Munich)
(86) International application number: PCT/JP2023/029555
(87) International publication number: WO 2024/116482

(57) **Abstract**

A detection system (10) according to the present invention comprises: a camera (11) which images a fluid flowing through a pipe; an image processing unit (13) which performs image processing including a step of binarizing an image captured by the camera (11); and a detection unit (14) which detects a contaminant mixed into the fluid on the basis of the image processed by the image processing unit (13).

## Description

### Technical Field

The present invention relates to a detection system and a detection method for, for example, detecting a contaminant (hereinafter referred to as a "contaminant" as appropriate) mixed into fluid such as oil.

### Background Art

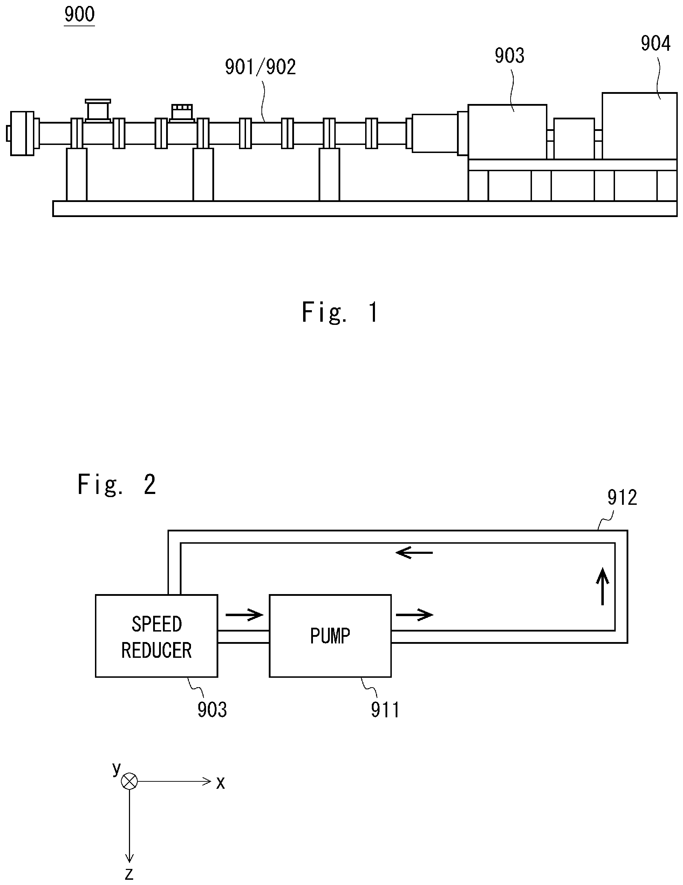

Fig. 1 is a diagram showing an example of a schematic configuration of an ordinary extruder 900.

The extruder 900 shown in Fig. 1 includes a cylinder 901, a screw 902, a gear reducer 903, and a motor 904. The screw 902 is rotatably included in the cylinder 901. The gear reducer 903 is connected to the screw 902 in the cylinder 901 and the motor 904. The gear reducer 903 rotates the screw 902 by transmitting a rotation force of the motor 904 to the screw 902 at a reduced rotational speed. The extruder 900 extrudes a raw material supplied through a raw material supply unit (not shown) forward (in the left direction in the figure) while the raw material is being pressurized with the screw 902.

Note that a plurality of gears and bearings are used in the gear reducer 903. Therefore, in general, oil is supplied to the gear reducer 903 as lubricating oil for lubricating the gears and the bearings.

Fig. 2 is a diagram showing an example of a schematic configuration of an ordinary oil circulation mechanism for supplying oil to the gear reducer 903.

As shown in Fig. 2, a pump 911 supplies oil to the gear reducer 903 while circulating the oil in a pipe 912.

However, in the gear reducer 903, a contaminant may be generated because, for example, the surfaces of components, such as gears, bearings, and the like, are peeled off due to fatigue due to the use of the components, and the generated contaminant may be mixed into the oil. The contaminant generated inside the gear reducer 903 is mainly iron powder generated from the surfaces of the components. Further, when the components bite the contaminant mixed into the oil, the generation of contaminants may be further promoted. As a result, the components may be damaged, leading to the stop or failure of the gear reducer 903.

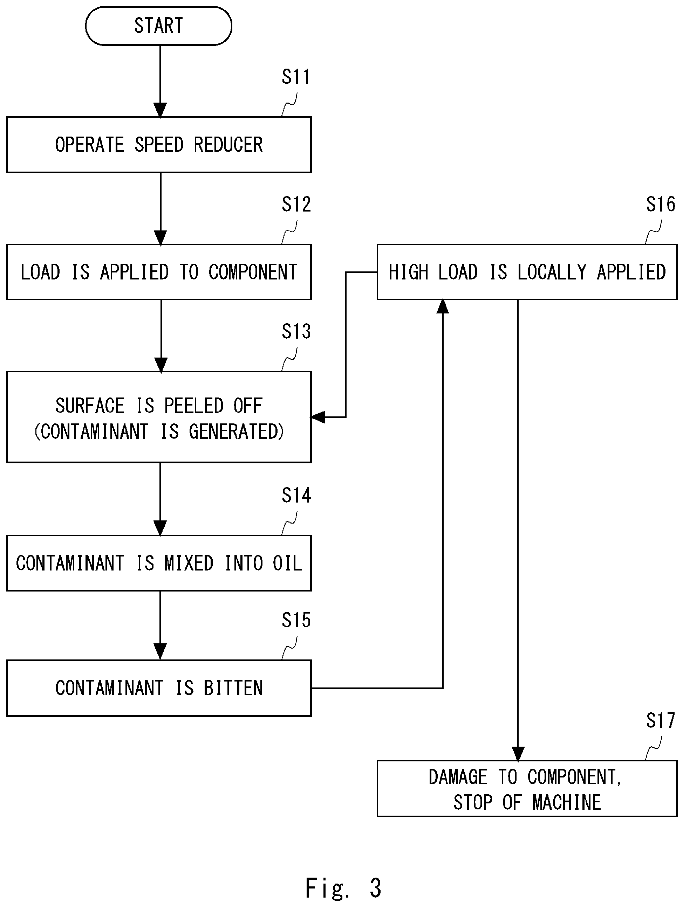

Fig. 3 is a flowchart for explaining an example of a mechanism in which the components are damaged due to a contaminant in the gear reducer 903.

As shown in Fig. 3, when the gear reducer 903 is operated (Step S11), a load is applied to the components (Step S12). This load causes the surfaces of the components to be peeled off due to fatigue and hence a contaminant is generated (Step S13), and then the generated contaminant is mixed into oil (Step S14). Further, when the components bite the contaminant mixed into the oil (Step S15), a high load is locally applied to the components (Step S16), and the generation of contaminants is promoted (Step S13). Further, in Step S16, depending on the load applied to the components, the components may be damaged, leading to the stop of the gear reducer 903 (Step S17).

Fig. 4 is a diagram showing an example of a state in which the gears are damaged due to a contaminant in the gear reducer 903. Specifically, Fig. 4 shows a state in which the surface of one of two gears 921 and 922 is peeled off from a part where the gears 921 and 922 are engaged and hence a contaminant is generated, and the contaminant is mixed into oil and then made to flow, whereby another part of the surface of each of the gears 921 and 922 is damaged.

Therefore, in recent years, in order to avoid the components from being damaged in advance, a contaminant mixed into oil flowing through the pipe is detected by sensors. Typical examples of such sensors include a laser type sensor and a magnetic field type sensor disclosed in Patent Literature 1.

Fig. 5 is a diagram for explaining a principle of a laser type sensor.

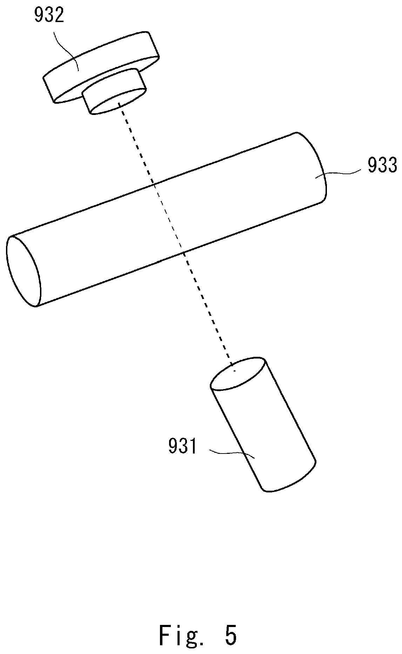

As shown in Fig. 5, in the laser type sensor, a light emitting unit 931 makes laser light incident on a light receiving unit 932 as incident light so that the laser light passes oil flowing through a pipe 933. Then the number of contaminants and the size thereof that have blocked the incident light are monitored.

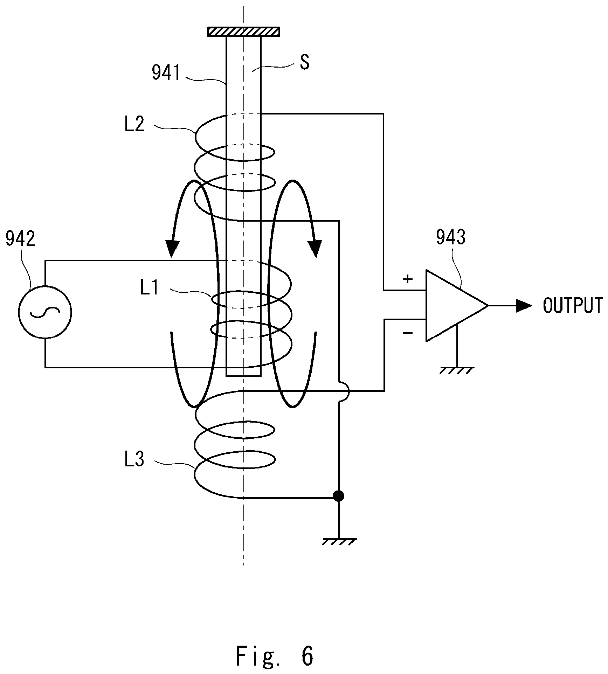

Fig. 6 is a diagram for explaining a principle of a magnetic field type sensor.

As shown in Fig. 6, in the magnetic field type sensor, a detection coil L2 is provided over one of coaxial sides of an excitation coil L1, and a compensation coil L3 is provided over the other side. Then, in a state in which the excitation coil L1 is excited by an excitation current from a power supply apparatus 942, a container (e.g., a pipe) 941 in which a sample (e.g., oil) S mixed with iron powder as a contaminant is encapsulated is inserted into the excitation coil L1 from the detection coil L2 side. A difference between the induced voltages of the detection coil L2 and the compensation coil L3 induced at this time is detected by a differential amplifier 943.

### Citation List

### Patent Literature

[Patent Literature 1] Japanese Unexamined Patent Application Publication No. 2015-184096

### Summary of Invention

### Technical Problem

However, each of the above-described laser type sensor and magnetic field type sensor has the following problem.

First, the laser type sensor has a problem that the detection sensitivity of a contaminant is reduced when oil itself has deteriorated.

Further, the magnetic field type sensor has a problem that the magnetic field type sensor cannot detect a contaminant that is rusted and thus no longer magnetic, and thus can only detect a contaminant of iron powder.

Further, each of the laser type sensor and the magnetic field type sensor has a problem that it cannot detect the deterioration of oil itself.

Therefore, an object of the present invention is to provide a detection system and a detection method that can satisfactorily detect a contaminant mixed into oil or detect the deterioration of oil itself.

### Solution to Problem

A detection system according to one aspect includes:
a camera configured to capture an image of fluid flowing through a pipe;
an image processing unit configured to perform image processing including a process of binarizing a captured image captured by the camera; and
a detection unit configured to detect a contaminant mixed into the fluid based on the image on which the image processing has been performed by the image processing unit.

A detection system according to another aspect includes:
a camera configured to capture an image of fluid flowing through a pipe; and
a detection unit configured to determine a color of the fluid based on a captured image captured by the camera and determine a degree of deterioration of the fluid itself based on the determined color of the fluid.

A detection method according to one aspect is a detection method performed by a detection system, the detection method including the steps of:
capturing an image of fluid flowing through a pipe by a camera;
performing image processing including a process of binarizing the captured image of the fluid; and
detecting a contaminant mixed into the fluid based on the image on which the image processing has been performed.

### Advantageous Effects of Invention

According to the above-described aspects, it is possible to provide a detection system and a detection method that can satisfactorily detect a contaminant mixed into oil or detect the deterioration of oil itself.

### Brief Description of Drawings

Fig. 1 is a diagram showing an example of a schematic configuration of an ordinary extruder;
Fig. 2 is a diagram showing an example of a schematic configuration of an ordinary oil circulation mechanism;
Fig. 3 is a flowchart for explaining an example of a mechanism in which components are damaged due to a contaminant in a gear reducer;

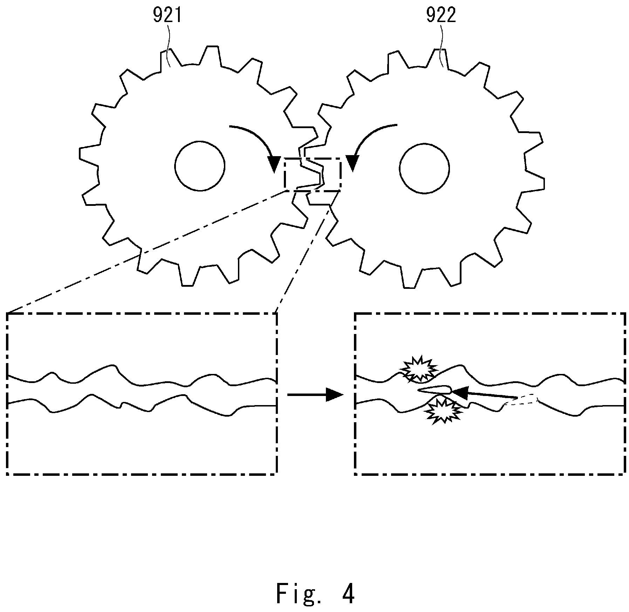

Fig. 4 is a diagram showing an example of a state in which gears are damaged due to a contaminant in the gear reducer;
Fig. 5 is a diagram for explaining a principle of a laser type sensor;
Fig. 6 is a diagram for explaining a principle of a magnetic field type sensor;

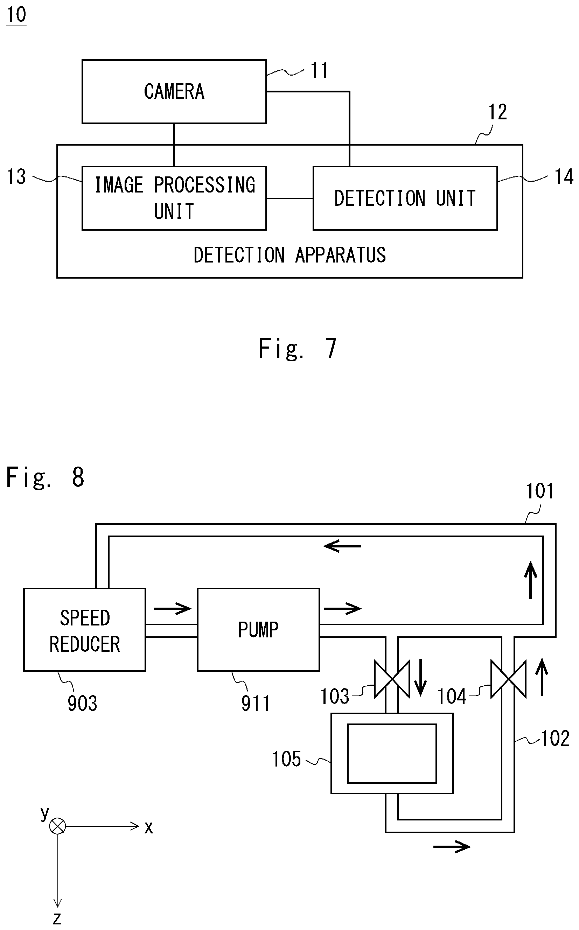

Fig. 7 is a diagram showing an example of a schematic configuration of a functional block of a detection system according to a first embodiment;
Fig. 8 is a diagram showing an example of a schematic configuration of an oil circulation mechanism according to the first embodiment;

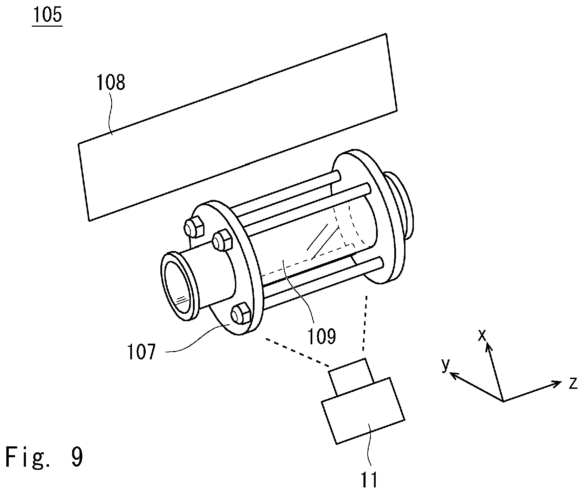

Fig. 9 is a diagram showing an example of an image captured part according to the first embodiment;

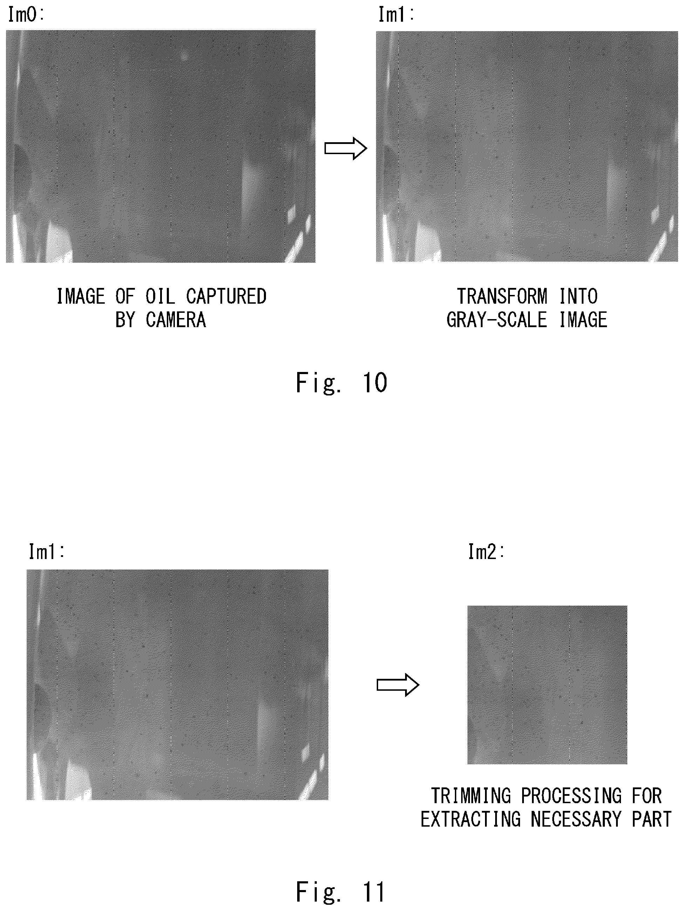

Fig. 10 is a diagram for explaining an example of a process of transforming a captured image captured by a camera into a gray-scale image in an image processing unit according to the first embodiment;
Fig. 11 is a diagram for explaining an example of a process of performing trimming processing for extracting a necessary part from the gray-scale image in the image processing unit according to the first embodiment;

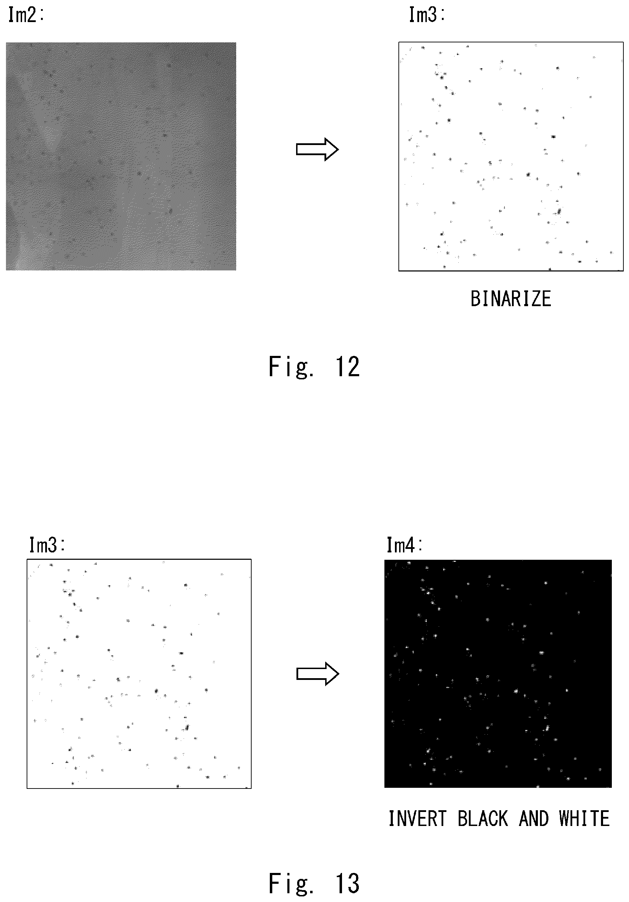

Fig. 12 is a diagram for explaining an example of a process of binarizing an image on which the trimming processing has been performed in the image processing unit according to the first embodiment;
Fig. 13 is a diagram for explaining an example of a process of inverting black and white of a binarized image in the image processing unit according to the first embodiment;

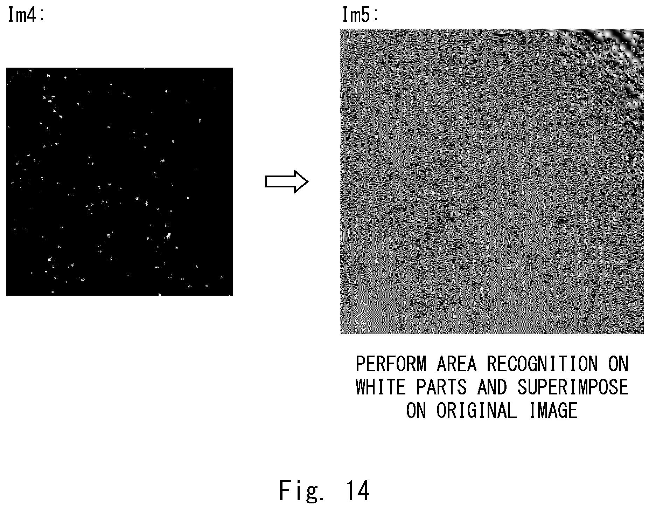

Fig. 14 is a diagram for explaining an example of a process of performing area recognition on an area of a contamination in the image in which black and white have been inverted and then superimposing this image on the original image in the image processing unit according to the first embodiment;

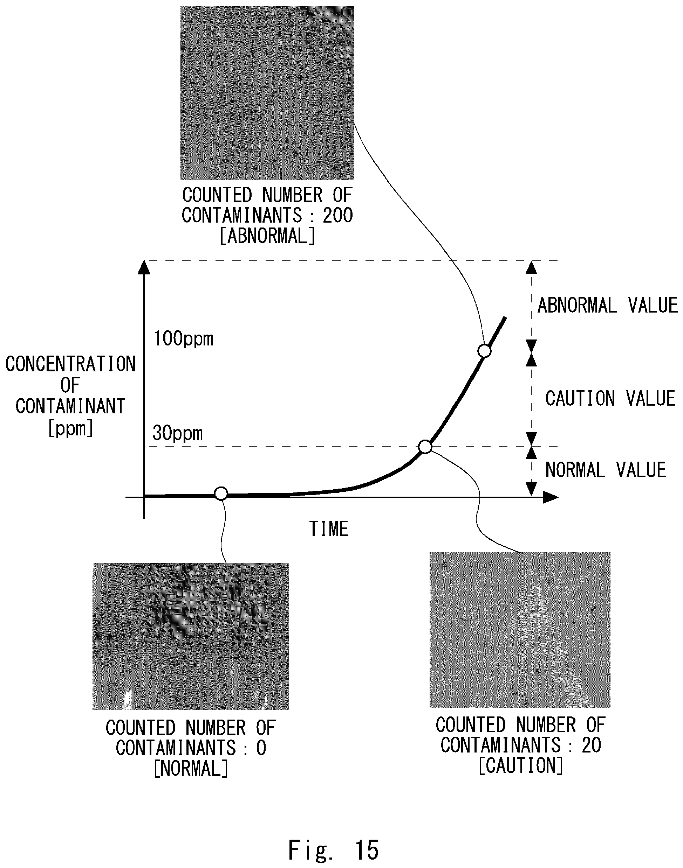

Fig. 15 is a diagram for explaining an example of an operation for calculating a concentration of a contaminant in oil in a detection unit according to the first embodiment;

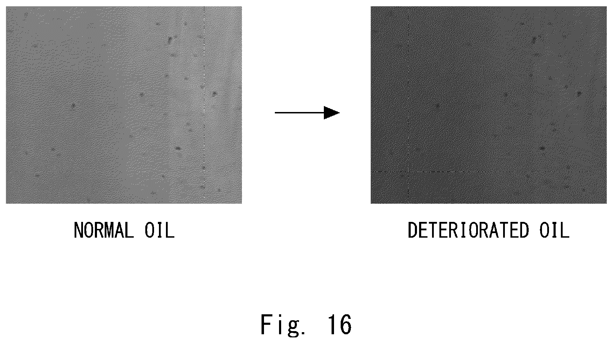

Fig. 16 is a diagram for explaining an example of an operation for determining the color of oil in the detection unit according to the first embodiment;

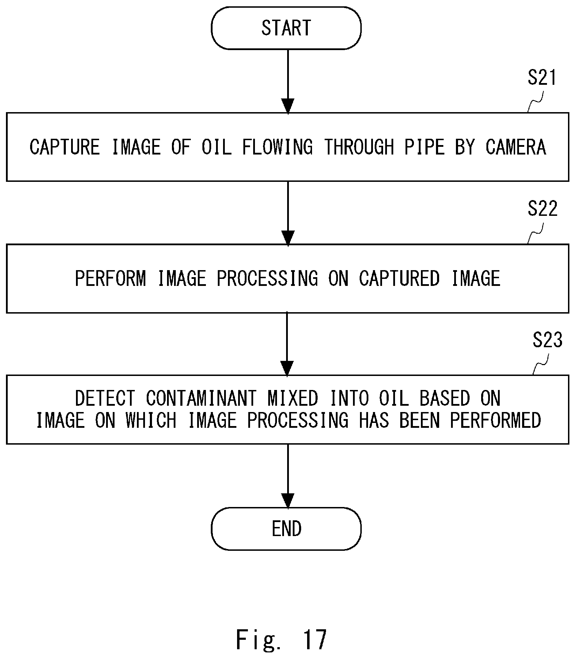

Fig. 17 is a flowchart for explaining an example of a schematic flow of operations performed by the detection system according to the first embodiment;

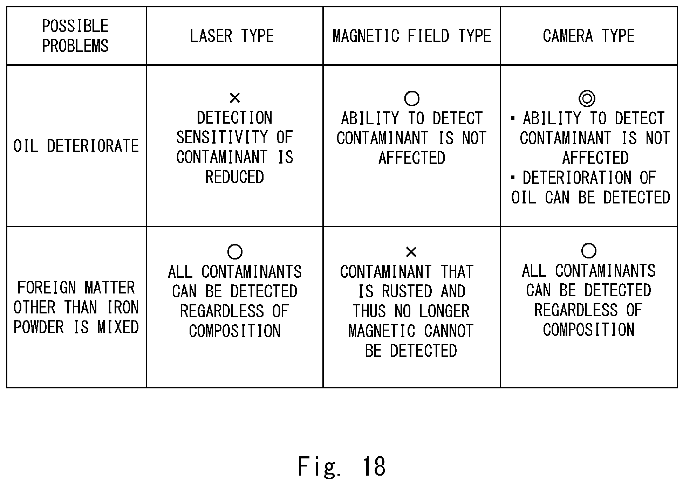

Fig. 18 is a diagram showing an example of a comparison table of the characteristics of a laser type sensor, a magnetic field type sensor, and a camera type sensor;

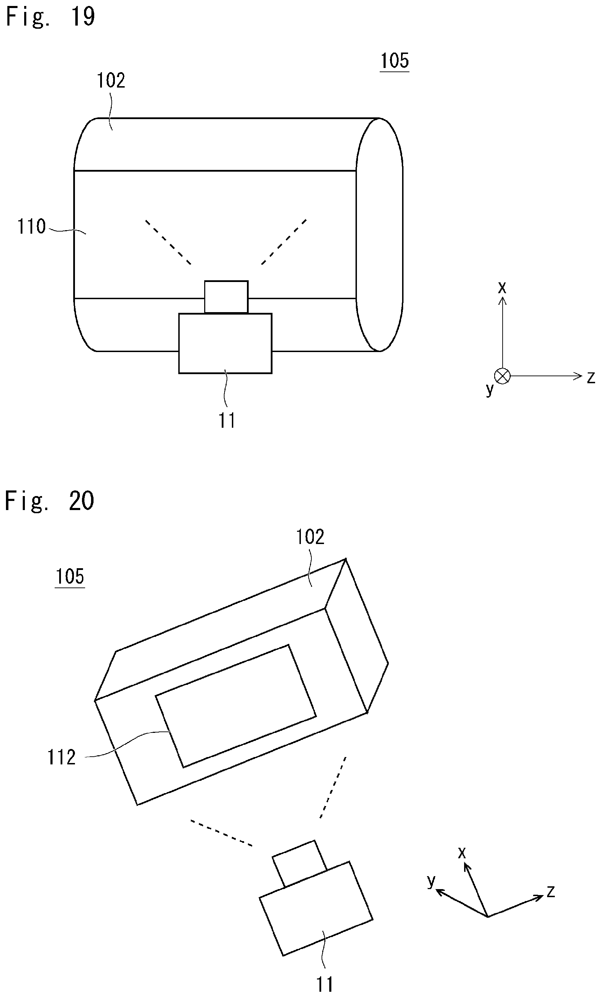

Fig. 19 is a diagram showing an example of an image captured part according to another embodiment;
Fig. 20 is a diagram showing an example of an image captured part according to another embodiment;

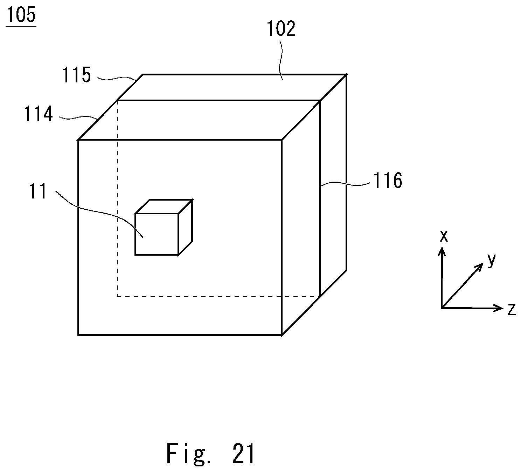

Fig. 21 is a diagram showing an example of an image captured part according to another embodiment; and

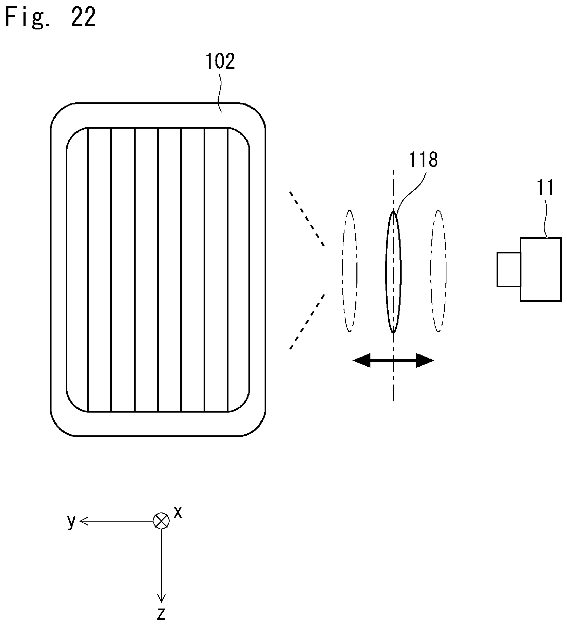

Fig. 22 is a diagram showing an image example in which an image of oil flowing through a pipe in which the thickness of a flow path is large is captured by a camera having a focus adjustment function.

### Description of Embodiments

Embodiments of the present invention will be described hereinafter with reference to the drawings. Note that, in order to clarify the description, the following descriptions and the drawings are partially omitted and simplified as appropriate. Further, the same elements are denoted by the same reference symbols throughout the drawings, and redundant descriptions are omitted as necessary. Further, specific numerical values and the like shown below are merely examples for facilitating understanding of the present invention, and they are not limited to those shown below. Further, in the following descriptions and the drawings, an example in which fluid is oil will be described. However, the fluid is not limited to oil.

### <First Embodiment>

Fig. 7 is a diagram showing an example of a schematic configuration of a functional block of a detection system 10 according to a first embodiment. Note that the detection system 10 according to the first embodiment detects a contaminant flowing into oil supplied to the gear reducer 903 provided in the extruder 900 shown in Fig. 1.

As shown in Fig. 7, the detection system 10 according to the first embodiment is a camera type sensor that detects a contaminant mixed into oil flowing through a pipe by using a camera 11, and includes the camera 11 and a detection apparatus 12.

The detection apparatus 12 includes an image processing unit 13 and a detection unit 14. The detection apparatus 12 is implemented by a computer such as a general-purpose personal computer. Note that, in Fig. 7, the camera 11 is provided outside the detection apparatus 12. However, the present disclosure is not limited thereto. For example, when a camera is installed in a computer that implements the detection apparatus 12, this camera may be used as the camera 11.

The camera 11 captures an image of oil supplied to the gear reducer 903.

Fig. 8 is a diagram showing an example of a schematic configuration of an oil circulation mechanism for supplying oil to the gear reducer 903 according to the first embodiment. Note that, in Fig. 8, the gear reducer 903 and the pump 911 are similar to those shown in Fig. 2.

In the oil circulation mechanism shown in Fig. 8, in a normal state, two valves 103 and 104 are closed and oil is made to circulate in a pipe 101. On the other hand, when a contaminant is detected, the two valves 103 and 104 are opened and oil is also made to flow through a pipe 102. An image captured part (i.e., a part where an image is captured by the camera) 105 is provided in the middle of the pipe 102.

Fig. 9 shows an example of the image captured part 105 according to the first embodiment.

The image captured part 105 shown in Fig. 9 includes a sight glass 107 and a screen 108. The sight glass 107 is inserted in the middle of the pipe 102. Further, a window 109 as a transparent part is formed in the sight glass 107, and oil flowing inside the sight glass 107 can be visually observed through the window 109. The screen 108 serves as a background image, and is disposed in the rear surface of the sight glass 107 when viewed from the camera 11. However, if it is possible to capture an image of oil by the camera 11 so that a contaminant flowing into the oil can be detected even without the screen 108, the screen 108 may not be provided.

Further, although not shown in Fig. 9, the image captured part 105 preferably includes a light source for illumination for illuminating the inside of the window of the sight glass 107. However, since a suitable type of the light source differs depending on an environment in which the pipe 102 is installed, a light source of the type suitable for the environment may be used.

The camera 11 captures an image of the oil flowing through the pipe 102 through the window 109 in the above-described image captured part 105 as oil supplied to the gear reducer 903.

The image processing unit 13 performs image processing on the captured image captured by the camera 11. Note that details of the image processing performed by the image processing unit 13 will be described later.

The detection unit 14 detects a contaminant mixed into the oil based on the image on which the image processing has been performed by the image processing unit 13.

Further, the detection unit 14 may count the number of contaminants mixed into the oil based on the image on which the image processing has been performed by the image processing unit 13. Further, the detection unit 14 may calculate a concentration of the contaminant in the oil based on the number of contaminants. Further, the detection unit 14 may determine the degree of deterioration of components such as gears and bearings used in the gear reducer 903 based on the number of contaminants or the concentration of the contaminant in the oil. At this time, the detection unit 14 may determine the degree of deterioration of the components by comparing the concentration of the contaminant in the oil with a threshold. Further, if a plurality of thresholds are set as thresholds, the degree of deterioration of the components can be classified into a larger number of levels.

Further, the detection unit 14 may determine the color of the oil based on the captured image captured by the camera 11 or the image on which the image processing has been performed by the image processing unit 13, and determine the degree of deterioration of the oil itself based on the determined color of the oil. At this time, the detection unit 14 may learn in advance a plurality of combinations of the color of the oil and the degree of deterioration of the oil in that color. Further, the detection unit 14 may determine the degree of deterioration of the oil itself based on the above determined color of the oil and a result of the above-described learning.

Further, the detection unit 14 may have an output function. For example, the detection unit 14 may generate an output signal indicating at least one of the number of contaminants mixed in the oil, the concentration of the contaminant in the oil, the degree of deterioration of the components, and the degree of deterioration of the oil itself. Further, the detection unit 14 may display the output signal on a display unit (not shown) provided in the detection apparatus 12, or output the output signal to any apparatus (not shown) provided outside the detection apparatus 12. However, an output unit (not shown) having such an output function may be provided in the detection apparatus 12 separately from the detection unit 14.

Next, an operation performed by the image processing unit 13 will be described in detail.

As described above, the image processing unit 13 performs image processing on a captured image of oil captured by the camera 11.

Figs. 10 to 14 are diagrams for explaining examples of processes included in the image processing performed by the image processing unit 13.

### Process 1 (Fig. 10):

First, the image processing unit 13 obtains an image Im0 which is a captured image of oil captured by the camera 11. The image Im0 is a color image. Therefore, the image processing unit 13 transforms the image Im0 into a gray-scale image, thereby obtaining an image Im1.

### Process 2 (Fig. 11):

Next, the image processing unit 13 performs trimming processing for extracting a necessary part from the image Im1, thereby obtaining an image Im2. At this time, a part to be extracted from the image Im1 is a predetermined part in order to prevent the occurrence of variation in the accuracy of detection.

### Process 3 (Fig. 12):

Next, the image processing unit 13 binarizes the image Im2, thereby obtaining an image Im3. In the image Im3, an area that appears black corresponds to a contaminant.

### Process 4 (Fig. 13):

Next, the image processing unit 13 inverts black and white of the image Im3, thereby obtaining an image Im4. Therefore, in the image Im4, an area that appears white corresponds to a contaminant.

### Process 5 (Fig. 14):

After that, the image processing unit 13 performs area recognition on the area of the contaminant that appears white in the image Im4. The area recognition is a process of converting the area of the contaminant to a predetermined color. In Fig. 14, the area of the contaminant is converted to green. Then, the image processing unit 13 superimposes the image on which the area recognition has been performed on the original image Im0 captured by the camera 11, thereby obtaining an image Im5.

However, the image processing unit 13 does not need to perform all of the above-described processes 1 to 5 as the image processing. The detection unit 14 provided in the subsequent stage can detect, depending on a resolution or the like of an image obtained by binarization, a contaminant mixed into oil based on the image obtained by binarization.

Therefore, the image processing unit 13 only needs to perform at least a process of binarizing a captured image as the image processing, and may optionally perform other processes in the processes 1 to 5 in accordance with the resolution or the like of the image obtained by the binarization of the captured image.

Note that when the image processing unit 13 does not perform the processes 4 and 5, the detection unit 14 cannot determine the color of the oil from the above-described image Im3. Therefore, in this case, the detection unit 14 may determine the color of the oil based on the image Im0, which is a captured image (a color image) captured by the camera 11, and determine the degree of deterioration of the oil itself based on the color of the oil. Alternatively, the detection unit 14 may determine the color of the oil based on the image Im1 obtained by transforming the image Im0 into a gray-scale image by the image processing unit 13 or the image Im2, and determine the degree of deterioration of the oil itself based on the color of the oil.

Next, an operation performed by the detection unit 14 will be described in detail.

Fig. 15 is a diagram for explaining an example of an operation for calculating a concentration of a contaminant in oil in the detection unit 14.

As shown in Fig. 15, the detection unit 14 counts the number of contaminants mixed into oil, and calculates a concentration [ppm] of the contaminant in the oil based on the number of contaminants. For example, the concentration of the contaminant may be calculated by dividing the number of contaminants by a flow path volume of the oil. Further, the detection unit 14 sets two thresholds (30 [ppm] and 100 [ppm]) for the concentration of the contaminant, and classifies the concentration of the contaminant into three levels of a normal value, a caution value, and an abnormal value in accordance with the set two thresholds.

Note that the detection unit 14 may perform further processes using a result of the classification described above. For example, the detection unit 14 may determine the degree of deterioration of components used in the gear reducer 903 by using the result of the classification described above. For example, when the concentration of the contaminant is an abnormal value, a caution value, and a normal value, the detection unit 14 may determine that the degree of deterioration of the components is high, medium, and low, respectively. Further, when the concentration of the contaminant is an abnormal value, the detection unit 14 may output an alert recommending that oil be changed.

Fig. 16 is a diagram for explaining an example of an operation for determining the color of oil in the detection unit 14.

As shown in Fig. 16, when oil itself deteriorates, the color of the oil changes. Therefore, the detection unit 14 determines the color of the oil in order to determine the degree of deterioration of the oil itself. Note that when the degree of deterioration of the oil itself is determined, the determination may be made from the color of the oil and a result of learning of the color of the oil in accordance with the degree of deterioration of the oil as described above.

Fig. 17 is a flowchart for explaining an example of a schematic flow of operations performed by the detection system 10 according to the first embodiment.

As shown in Fig. 17, first, the camera 11 captures an image of oil flowing through the pipe 102 in the image captured part 105 (Step S21).

Next, the image processing unit 13 performs image processing on a captured image captured by the camera 11 in Step S21 (Step S22).

At this time, the image processing unit 13 performs at least a process of binarizing a captured image as the image processing.

Further, the image processing unit 13 may optionally perform the process 1 of transforming a captured image into a gray-scale image, the process 2 of performing trimming processing for extracting a necessary part from the grays-scale image, the process 3 of binarizing an image on which the trimming processing has been performed, the process 4 of inverting black and white of a binarized image, and the process 5 of performing area recognition on an area of a contaminant in the image in which black and white have been inverted and then superimposing this image on the original image.

After that, the detection unit 14 detects a contaminant mixed into the oil based on the image on which the image processing has been performed by the image processing unit 13 in Step S22 (Step S23).

At this time, the detection unit 14 may count the number of contaminants mixed into the oil based on the image on which the image processing has been performed by the image processing unit 13 in Step S22. Further, the detection unit 14 may calculate a concentration of the contaminant in the oil based on the number of contaminants.

Further, the detection unit 14 may determine the degree of deterioration of components such as gears and bearings used in the gear reducer 903 based on the number of contaminants or the concentration of the contaminant in the oil. Further, the detection unit 14 may determine the color of the oil based on the captured image captured by the camera 11 in Step S21 or the image on which the image processing has been performed by the image processing unit 13 in Step S22, and may determine the degree of deterioration of the oil itself based on the color of the oil.

As described above, the detection system 10 according to the first embodiment is a camera type sensor that detects a contaminant mixed into oil flowing through a pipe by using the camera 11 and determines the degree of deterioration of the oil itself.

The advantages of a camera type sensor will be described below.

Fig. 18 is a diagram showing an example of a comparison table of the characteristics of a laser type sensor, a magnetic field type sensor, and a camera type sensor.

As shown in Fig. 18, the laser type sensor has a problem that the detection sensitivity of a contaminant is reduced when oil itself has deteriorated.

On the other hand, the camera type sensor has an advantage that the deterioration of oil does not affect its ability to detect a contaminant. Further, the camera type sensor has an advantage that it can detect the deterioration of oil itself.

Further, the magnetic field type sensor has a problem that the magnetic field type sensor can only detect a contaminant of iron powder since it cannot detect a contaminant that is rusted and thus no longer magnetic.

In contrast, the camera type sensor has an advantage that it can detect a contaminant that is rusted and thus no longer magnetic, and hence can detect all contaminants regardless of the composition of the contaminant.

As described above, since the detection system 10 according to the first embodiment is implemented as a camera type sensor, it is possible to achieve an effect that the advantages of the camera type sensor can be obtained, and therefore a contaminant mixed into oil can be satisfactorily detected and the deterioration of the oil itself can be detected.

### <Other Embodiments>

In the example of Fig. 9, the image captured part 105 has a structure using the sight glass 107 inserted in the middle of the pipe 102. However, the present disclosure is not limited thereto. The image captured part 105 may have a structure in which a transparent part through which an image of the inside of the pipe 102 can be captured by the camera 11 is provided in the pipe 102 itself, or another member provided with such a transparent part may be inserted in the middle of the pipe 102.

Figs. 19 to 21 are diagrams showing examples of the image captured part 105 according to another embodiment.

In the example of Fig. 19, a window 110 as a transparent part is provided in the pipe 102 itself, and only the part of the window 110 is flat.

In the example of Fig. 20, a window 112 as a transparent part is provided in the pipe 102 itself, and the part of the pipe 102 other than the window 112 is white. Therefore, the white part of the pipe 102 can be used as a screen.

In the example of Fig. 21, the pipe 102 has a structure in which the camera 11 and a screen 115 are integrated. The screen 115 is white. Further, a window 114 as a transparent part is provided in the pipe 102 itself, and the camera 11 is fixed to the outside of the pipe 102 (the window 114) so that it focuses on a surface 116.

Further, when the thickness of a flow path of oil in the pipe 102 is large and the depth of field of the camera 11 (the range within which the camera 11 can focus) is shallow, a contaminant which the camera 11 cannot focus on cannot be detected. As a result, when unevenness of the concentration of the contaminant in the flow path has occurred, the accuracy of counting of contaminants is reduced. Therefore, a camera having a focus adjustment function may be used as the camera 11.

Fig. 22 is a diagram showing an image example in which an image of oil flowing through the pipe 102 in which the thickness of a flow path is large is captured by the camera 11 having a focus adjustment function.

As shown in Fig. 22, the camera 11 is a camera capable of adjusting a focus position by moving a lens 118 in the front-rear direction (the y-direction in the figure). The camera 11 captures images while adjusting the focus position, thereby obtaining a plurality of images. The image processing unit 13 performs image processing after superimposing the plurality of images. Thus, the accuracy of counting of contaminants is expected to be improved.

The present invention made by the inventors of the present application has been described above in a concrete manner based on embodiments. However, the present invention is not limited to the above-described embodiments, and needless to say, various changes can be made without departing from the spirit and scope of the present invention. Further, the configurations in the respective embodiments may be switched as appropriate among the embodiments.

For example, the above-described detection apparatus 12 may include a processor such as a Central Processing Unit (CPU), a memory, etc., and the processor may read a computer program stored in the memory and execute it, whereby any processing of the detection apparatus 12 may be implemented.

The above-described program may be stored in a non-transitory computer readable medium or a tangible storage medium. By way of example, and not a limitation, non-transitory computer readable media or tangible storage media may include a RAM, a ROM, a flash memory, an SSD or other types of memory technologies, a Compact Disc (CD)-ROM, a Digital Versatile Disc (DVD), a Blu-ray (registered trademark) disc or other types of optical disc storages, a magnetic cassette, a magnetic tape, and a magnetic disc storage or other types of magnetic storage devices. The program may be transmitted on a transitory computer readable medium or a communication medium. By way of example, and not a limitation, transitory computer readable media or communication media may include electrical, optical, acoustical, or other forms of propagated signals.

This application is based upon and claims the benefit of priority from Japanese patent application No. 2022-193312, filed on December 2, 2022, the disclosure of which is incorporated herein in its entirety by reference.

### Reference Signs List

- 10: DETECTION SYSTEM
- 11: CAMERA
- 12: DETECTION APPARATUS
- 13: IMAGE PROCESSING UNIT
- 14: DETECTION UNIT
- 101, 102: PIPE
- 103, 104: VALVE
- 105: IMAGE CAPTURED PART
- 107: SIGHT GLASS
- 108: SCREEN
- 109: WINDOW
- 903: GEAR REDUCER
- 911: PUMP

## Claims

1. A detection system comprising:
a camera configured to capture an image of fluid flowing through a pipe;
an image processing unit configured to perform image processing including a process of binarizing a captured image captured by the camera; and
a detection unit configured to detect a contaminant mixed into the fluid based on the image on which the image processing has been performed by the image processing unit.

2. The detection system according to claim 1, wherein the image processing further includes a process of transforming the captured image into a gray-scale image, and binarizing the gray-scale image.

3. The detection system according to claim 1, wherein the image processing further includes a process of performing area recognition on an area of the contaminant in the binarized image.

4. The detection system according to claim 3, wherein the image processing further includes a process of superimposing an image on which the area recognition has been performed on the captured image.

5. The detection system according to claim 1, wherein the detection unit counts the number of the contaminants mixed into the fluid based on the image on which the image processing has been performed by the image processing unit.

6. The detection system according to claim 5, wherein the detection unit calculates a concentration of the contaminant in the fluid based on the number of the contaminants mixed into the fluid.

7. The detection system according to claim 6, wherein
the fluid is oil, and
the pipe is a pipe configured to circulate oil supplied to a gear reducer.

8. The detection system according to claim 7, wherein
the gear reducer is a gear reducer provided in an extruder, and
the detection unit determines a degree of deterioration of components constituting the gear reducer based on the number of the contaminants or the concentration of the contaminant in oil.

9. The detection system according to claim 8, wherein the detection unit determines the degree of deterioration of the components by comparing the concentration of the contaminant in oil with a threshold.

10. A detection system comprising:
a camera configured to capture an image of fluid flowing through a pipe; and
a detection unit configured to determine a color of the fluid based on a captured image captured by the camera and determine a degree of deterioration of the fluid itself based on the determined color of the fluid.

11. The detection system according to claim 10, further comprising an image processing unit configured to transform the captured image into a gray-scale image,
wherein the detection unit determines a color of the fluid based on the image obtained by transforming the captured image into a gray-scale image by the image processing unit and determines a degree of deterioration of the fluid itself based on the determined color of the fluid.

12. The detection system according to claim 10 or 11, wherein
the detection unit learns in advance colors of the fluid corresponding to the respective degrees of deterioration of the fluid, and
the detection unit determines the degree of deterioration of the fluid itself based on the determined color of the fluid and a result of the learning.

13. The detection system according to claim 1, wherein
the pipe has a structure in which a transparent part is provided in the pipe or a structure in which a member provided with a transparent part is inserted in a middle of the pipe, and
the camera captures an image of the fluid flowing through the pipe through the transparent part.

14. A detection method performed by a detection system, the detection method comprising the steps of:
capturing an image of fluid flowing through a pipe by a camera;
performing image processing including a process of binarizing the captured image of the fluid; and
detecting a contaminant mixed into the fluid based on the image on which the image processing has been performed.
